# EUROPÄISCHE PATENTSCHRIFT

(11) **EP 1 654 136 B1**
(45) Veröffentlichungstag und Bekanntmachung des Hinweises auf die Patenterteilung: **27.12.2006**
(21) Anmeldenummer: 04803260.1
(22) Anmeldetag: 24.11.2004
(51) Int. Cl.: B60K 17/10, F04B 1/22, F04B 23/06, F16H 61/44, F16H 39/02

(54) **HYDROSTATISCHES ANTRIEBSSYSTEM MIT PUMPENSEITIGER HYDRAULIKFLUIDMENGENTEILUNG FÜR ZWEI HYDRAULIKKREISLÄUFE**
HYDROSTATIC DRIVE SYSTEM WITH PUMP-SIDED DIVISION OF THE AMOUNT OF HYDRAULIC FLUID FOR TWO HYDRAULIC CIRCUITS
SYSTEME D'ENTRAINEMENT HYDROSTATIQUE AVEC SEPARATION DE MASSE DE LIQUIDE HYDRAULIQUE COTE POMPE, POUR DEUX CIRCUITS HYDRAULIQUES

(30) Priorität: 23.12.2003 DE 10360959
(43) Veröffentlichungstag der Anmeldung: 10.05.2006
(73) Patentinhaber: Brueninghaus Hydromatik GmbH, 89275 Elchingen (DE)
(72) Erfinder: RÜCKGAUER, Norbert, 89185 Hüttisheim (DE); ESSIG, Heinz-Gerhard, 89173 Lonsee (DE)
(74) Vertreter: Körfer, Thomas
(86) Internationale Anmeldenummer: PCT/EP2004/013345
(87) Internationale Veröffentlichungsnummer: WO 2005/065978

(56) Entgegenhaltungen:
- EP-A- 0 378 742
- DE-A1- 19 833 942
- DE-B- 1 084 581
- DE-B- 1 292 984
- GB-A- 893 074

## Beschreibung

Die Erfindung betrifft ein hydrostatisches Antriebssystem mit pumpenseitiger Hydraulikfluidmengenteilung für zwei Hydraulikkreisläufe.

Hydraulische Fahrantriebe, die für einen Kurven-Fahrbetrieb ausgelegt sind, weisen, wie in der EP 0 378 742 A2 dargestellt, zwei voneinander getrennte hydraulische Kreisläufe auf, wobei jeder hydraulische Kreislauf aus einer Hydropumpe und einem Hydromotor besteht. Auf diese Weise ist es möglich, die unterschiedlichen Hydraulikfluidmengen für die beiden Hydromotoren bei einer Kurvenfahrt des hydraulischen Fahrantriebs getrennt von zwei Hydropumpen zu fördern.

Ein hydraulischer Fahrantrieb entsprechend der EP 0 378 742 A2 ist durch die Schwierigkeit gekennzeichnet, die bei einer Geradeaus-Fahrt erforderlichen gleich großen Hydraulikfluidmengen für die beiden Hydromotoren durch die beiden Hydropumpen zu erzeugen. Hinzukommt, daß bei einer Geradeaus-Fahrt des hydraulischen Fahrantriebs im Falle eines schlupfenden oder gar durchdrehenden Antriebsstranges die Hydraulikfluidmenge in dem dazugehörigen hydraulischen Kreislauf deutlich ansteigt, so daß der Hydromotor des jeweils anderen nicht schlupfenden und nicht durchdrehenden Antriebsstranges hydraulisch "überbrückt" wird. Auf diese Weise wird der hydraulische Fahrantrieb unwirksam.

Nachteilig am hydrostatischen Fahrantrieb der EP 0 378 742 A2 ist desweiteren die Verwendung von zwei getrennten Hydropumpen für die beiden hydraulischen Kreisläufe und die dadurch bedingte große axiale Baulänge.

Der Erfindung liegt daher die Aufgabe zugrunde, einen hydrostatischen Fahrantrieb derart weiterzuentwickeln, daß zur Vermeidung eines Schlupfes oder eines Durchdrehens eines Antriebsstranges ein Pumpenaggregat zur Anwendung kommt, das konstruktiv wesentlich einfacher als ein aus zwei getrennten Pumpen bestehendes Pumpenaggregat gestaltet ist.

Die Aufgabe der Erfindung wird durch ein hydrostatisches Antriebssystem mit den Merkmalen des Anspruchs 1 gelöst.

Der hydraulische Kreislauf besteht aus zwei Antriebssträngen, die jeweils von einem Hydromotor angetrieben werden, welche wiederum von einer gemeinsamen Hydropumpe mit einer Hydraulikfluidmenge versorgt werden. Die Hydropumpe weist dazu zwei Teilförderstränge auf, die jeweils einen Teilhydraulikfluidstrom in einer gemeinsamen Zylindertrommel der erfindungsgemäßen Hydropumpe des erfindungsgemäßen hydrostatischen Antriebssystems fördern. Die beiden Teilförderstränge der erfindungsgemäßen Hydropumpe des erfindungsgemäßen hydrostatischen Antriebssystems übernehmen die Aufgabe der beiden Hydropumpen des hydrostatischen Fahrantriebs der EP 0 378 742 A2. Da die beiden Teilförderstränge der erfindungsgemäßen Hydropumpe konstruktiv dahingehend hydraulisch gekoppelt sind, daß deren Hydraulikfluidförderströme in einem bestimmten fixen Verhältnis zueinander stehen, kann ein Anstieg eines Hydraulikfluidförderstroms, der den Hydromotor eines schlupfenden oder durchdrehenden Antriebsstrangs versorgt, durch den konstanten Hydraulikfluidförderstrom, der den jeweils anderen nicht schlupfenden und nicht durchdrehenden Antriebsstrang versorgt, unterdrückt werden. Auf diese Weise kann ein möglicher Schlupf oder ein mögliches Durchdrehen eines der beiden Hydromotoren verhindert werden.

Im Vergleich zum hydrostatischen Fahrantrieb der EP 0 378 742 A2 liegt ein Ein-Pumpensystem vor. Dieses ist durch einen geringeren Bauraum, insbesondere eine geringere axiale Baulänge, und reduzierten Verrohrungsaufwand gekennzeichnet. Gegenüber einem Zwei-Pumpensystem benötigt das erfindungsgemäße hydrostatische Antriebssystem kein Verteilergetriebe zum mechanischen Ankoppeln der Einzelpumpen, was wiederum den erforderlichen Bauraum reduziert und verschleißbedingte Wartungs- und Inspektionsaufwendungen nicht erforderlich macht.

Vorteilhafte Ausgestaltungen der Erfindung sind in den abhängigen Ansprüchen angegeben.

Zwischen den beiden Arbeitsleitungen, die jeweils einspeise- und ausspeiseseitig an den beiden Anschlüssen der beiden Teilförderstränge der Hydropumpe angeschlossen sind, können über angesteuerte 2/2-Wegeventile im Nicht-Schlupffall eines Antriebsstranges Ausgleichströme zwischen den beiden Arbeitsleitungen verwirklicht werden, um den Differentialausgleich bei Kurvenfahrt zu gewährleisten. Diese 2/2-Wegeventile können auch einspeise- und ausspeiseseitig in der Hydropumpe integriert sein.

Eine Ausführungsform der Erfindung ist in der Zeichnung dargestellt und wird nachfolgend näher beschrieben. Es zeigen:
- Fig. 1: ein Längsschnitt durch eine Hydropumpe eines erfindungsgemäßen hydraulischen Antriebssystems mit pumpenseitiger Hydraulikfluidmengenteilung;
- Fig. 2: eine vergrößerte Darstellung eines Ausschnitts des Längsschnitts der Hydropumpe eines erfindungsgemäßen hydraulischen Antriebssystems mit pumpenseitiger Hydraulikfluidmengenteilung und
- Fig. 3: ein Schaltbild einer Ausführungsform eines erfindungsgemäßen hydraulischen Antriebssystems mit pumpenseitiger Hydraulikfluidmengenteilung;

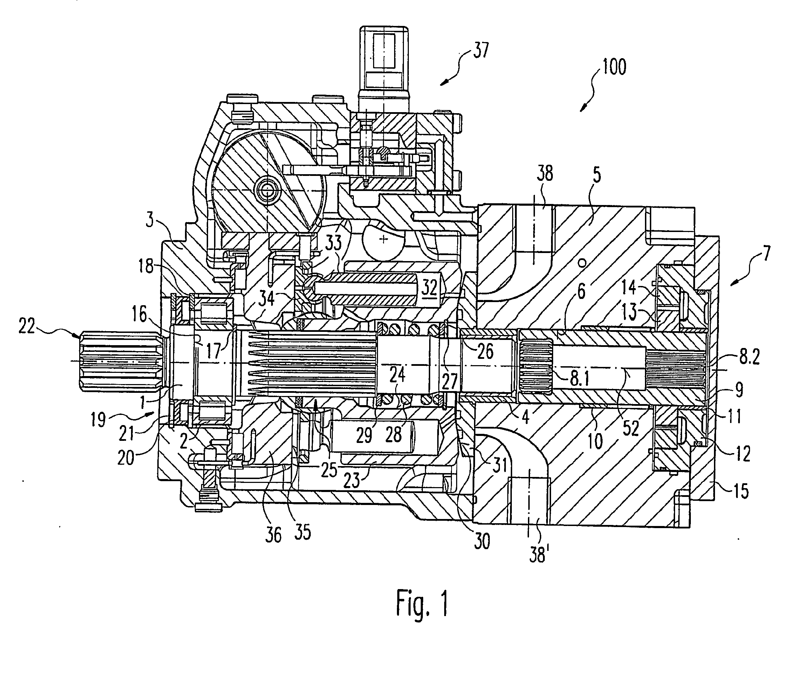

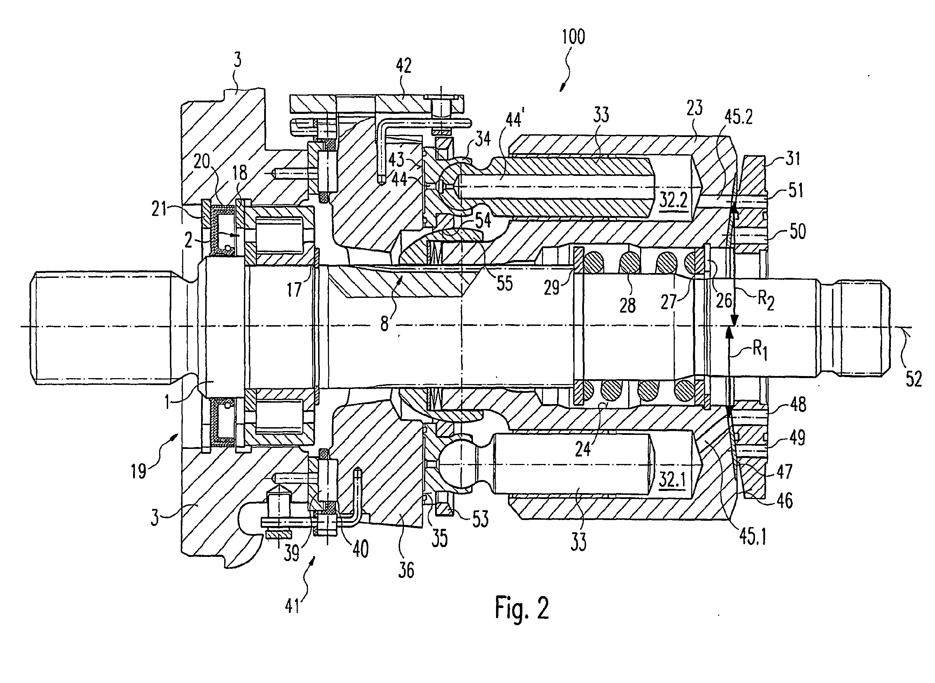

Ein Ausführungsbeispiel der Hydropumpe 100 des erfindungsgemäßen hydraulischen Antriebssystems mit pumpenseitiger Hydraulikfluidmengenteilung wird nachfolgend unter Bezugnahme auf Fig. 1 und 2 beschrieben.

In dem in Fig. 1 dargestellten Längsschnitt der Hydropumpe 100 ist gezeigt, wie die gemeinsame Antriebswelle 1 durch ein Rollenlager 2 an einem Ende eines Pumpengehäuses 3 gelagert ist. Zusätzlich ist die gemeinsame Antriebswelle 1 in einem Gleitlager 4 gelagert, welches in einer Anschlußplatte 5 angeordnet ist, die das Pumpengehäuse 3 an dem gegenüberliegenden Ende verschließt.

In der Anschlußplatte 5 ist eine, die Anschlußplatte vollständig in axialer Richtung durchdringende Ausnehmung 6 ausgebildet, in der zum einen das Gleitlager 4 angeordnet ist und die zum anderen von der gemeinsamen Antriebswelle 1 durchdrungen ist. Auf der von dem Pumpengehäuse 3 abgewandten Seite der Anschlußplatte 5 ist in eine radiale Erweiterung der Ausnehmung 6 die Hilfspumpe 7 eingesetzt. Zum Antreiben der Hilfspumpe 7 weist die gemeinsame Antriebswelle 1 eine Verzahnung 8.1 auf, die mit der entsprechenden Verzahnung einer Hilfspumpenwelle 9 im Eingriff ist. Die Hilfspumpenwelle 9 ist in der Ausnehmung 6 durch ein erstes Hilfspumpengleitlager 10 und durch ein zweites Hilfspumpengleitlager 11 in der Hilfspumpenanschlussplatte 12 gelagert.

Auf der Hilfspumpenwelle 9 ist ein Zahnrad 13 angeordnet, welches im Eingriff mit einem Hohlrad 14 ist. Über das Zahnrad 13 wird das Hohlrad 14, das drehbar in der Hilfspumpenanschlussplatte 12 angeordnet ist, ebenfalls von der Hilfspumpenwelle 9 und damit letztlich von der gemeinsamen Antriebswelle 1 angetrieben. In der Hilfspumpenanschlußplatte 12 sind der saug- und der druckseitige Anschluß für die Hilfspumpe 7 ausgebildet. Die Hilfspumpe 7 wird durch einen Deckel 15, der an der Anschlußplatte 5 montiert ist, in der radialen Erweiterung der Ausnehmung 6 der Anschlußplatte 5 fixiert.

Der Innenring des Rollenlagers 2 ist in axialer Richtung auf der gemeinsamen Antriebswelle 1 fixiert. Der Innenring liegt einerseits an einem Bund 16 der gemeinsamen Antriebswelle 1 an und ist auf der anderen Seite durch einen Sicherungsring 17 in dieser axialen Position gehalten, der in einer Nut der gemeinsamen Antriebswelle 1 eingesetzt ist. Die axiale Position des Rollenlagers 2 bezüglich des Pumpengehäuses 3 wird durch den Sicherungsring 18 bestimmt, der in einer umlaufenden Nut der Wellenöffnung 19 eingesetzt ist. In Richtung der Außenseite des Pumpengehäuses 3 ist in der Wellenöffnung 19 außerdem ein Dichtring 20 und abschließend ein weiterer Sicherungsring 21 angeordnet, wobei der Sicherungsring 21 in eine umlaufende Nut der Wellenöffnung 19 eingesetzt ist.

An dem aus dem Pumpengehäuse 3 herausragenden Ende der gemeinsamen Antriebswelle 1 ist eine Antriebsverzahnung 22 ausgebildet, über die die Hydropumpe durch eine nicht dargestellte Antriebsmaschine angetrieben wird.

Im Inneren des Pumpengehäuses 3 ist eine Zylindertrommel 23 angeordnet, die eine zentrale Durchgangsöffnung 24 aufweist, welche von der gemeinsamen Antriebswelle 1 durchdrungen wird. Über eine weitere Antriebsverzahnung 25 ist die Zylindertrommel 23 verdrehgesichert, aber in axialer Richtung verschiebbar mit der gemeinsamen Antriebswelle 1 verbunden, so daß sich eine Drehbewegung der gemeinsamen Antriebswelle 1 auf die Zylindertrommel 23 überträgt.

In eine in der zentralen Durchgangsöffnung 24 ausgebildeten Nut ist ein weiterer Sicherungsring 26 eingesetzt, an dem eine erste Stützscheibe 27 anliegt. Die erste Stützscheibe 27 bildet ein erstes Federlager für eine Druckfeder 28 aus. Ein zweites Federlager für die Druckfeder 28 wird durch eine zweite Stützscheibe 29 gebildet, die sich an der Stirnseite der weiteren Antriebsverzahnung 25 abstützt. Die Druckfeder 28 übt damit einerseits auf die gemeinsame Antriebswelle 1 und andererseits auf die Zylindertrommel 23 jeweils eine Kraft in entgegengesetzt axialer Richtung aus. Die gemeinsame Antriebswelle 1 wird so belastet, daß der Außenring des Rollenlagers 2 sich an dem Sicherungsring 18 abstützt.

In entgegengesetzter Richtung wirkt die Druckfeder 28 auf die Zylindertrommel 23, die mit einer an der Stirnseite der Zylindertrommel 23 ausgebildeten sphärischen Vertiefung 30, in Anlage an einer Steuerplatte 31 gehalten wird. Die Steuerplatte 31 liegt wiederum mit der von der Zylindertrommel 23 abgewandten Seite dichtend an der Anschlußplatte 5 an. Durch die sphärische Vertiefung 30, die mit einer entsprechenden sphärischen Ausformung der Steuerplatte 31 korrespondiert, wird die Zylindertrommel 23 zentriert.

Die Position der Steuerplatte 31 in radialer Richtung wird durch den äußeren Umfang des Gleitlagers 4 festgelegt. Das Gleitlager 4 ist zu diesem Zweck nur zum Teil in die Ausnehmung 6 in der Anschlußplatte 5 eingesetzt.

In die Zylindertrommel 23 sind über einen gemeinsamen Teilkreis verteilt Zylinderbohrungen 32 eingebracht, in denen Kolben 33 angeordnet sind, die in den Zylinderbohrungen 32 längsverschieblich sind. An dem von der sphärischen Vertiefung 30 abgewandten Ende ragen die Kolben 33 teilweise aus der Zylindertrommel 23 heraus. An diesem Ende ist an den Kolben 33 jeweils ein Gleitschuh 34 befestigt, über den sich die Kolben 33 auf einer Lauffläche 35 einer Schwenkscheibe 36 abstützen.

Zum Erzeugen einer Hubbewegung der Kolben 33 ist der Winkel, den die Lauffläche 35 der Schwenkscheibe 36 mit der Mittelachse einschließt, veränderbar. Die Schwenkscheibe 36 kann hierzu durch die Verstelleinrichtung 37 in ihrer Neigung verstellt werden. Zum Aufnehmen der Kräfte, die durch die Gleitschuhe 34 auf die Schwenkscheibe 36 übertragen werden, ist die Schwenkscheibe 36 in dem Pumpengehäuse 3 rollengelagert.

Zum Anschließen der Hydropumpe 100 an einen ersten hydraulischen Kreislauf und an einen zweiten hydraulischen Kreislauf sind in der Anschlußplatte 5 ein erster Anschluß 38, ein zweiter Anschluß 38', ein dritter Anschluß 56 und ein vierter Anschluß 56' vorgesehen. In Fig. 1 ist schematisch ein erster Anschluß 38 und ein zweiter Anschluß 38' dargestellt, die in nicht gezeigter Weise über die Steuerplatte 31 mit den Zylinderbohrungen 32 verbindbar sind und einen ersten Teilförderstrang 101 der Hydropumpe 100 für einen ersten hydraulischen Kreislauf bilden. Der in Fig. 1 nicht dargestellte dritte und vierte Anschluß 56 und 56' ist in analoger Weise mit den Zylinderbohrungen 32 verbindbar und bildet den zweiten Teilförderstrang 102 der Hydropumpe 100 für einen zweiten hydraulischen Kreislauf.

Eine vergrößerte Darstellung der im Inneren des Pumpengehäuses 3 zusammenwirkenden Bauteile ist in Fig. 2 dargestellt.

Auf ihrer von der Lauffläche 35 abgewandten Seite stützt sich die Schwenkscheibe 36 auf einem Zylinderrollenlager 39 ab, dessen Zylinderrollen von einem Lagerkäfig 40 gehalten werden. Um eine sichere Rückkehr der Zylinderrollen nach jeder Schwenkbewegung in ihre Ausgangslage sicherzustellen, ist der Lagerkäfig 40 an einem Sicherungsmechanismus 41 befestigt, durch den der Lagerkäfig 40 eine kontrollierte Bewegung sowohl beim Ausschwenken als auch beim Zurückschwenken ausführt.

Zum Ausführen einer Schwenkbewegung ist die Schwenkscheibe 36 an einen Gleitstein 42 gekoppelt, der auf nicht dargestellte Weise die Schwenkscheibe 36 um eine in der Zeichenebene liegende Achse dreht.

Die in Fig. 1 allgemein mit 32 bezeichneten Zylinderbohrungen unterteilen sich in eine erste Gruppe von Zylinderbohrungen 32.1 und eine zweite Gruppe von Zylinderbohrungen 32.2. Wie es bei den Ausführungen zu Fig. 1 bereits kurz erläutert wurde, ist an dem von der Steuerplatte 31 abgewandten Ende der Kolben 33 jeweils ein Gleitschuh 34 angeordnet. Der Gleitschuh 34 ist mit einer Ausnehmung an einem kugelförmigen Kopf des Kolbens 33 befestigt, so daß der Gleitschuh 34 beweglich an dem Kolben 33 fixiert ist und Zug- und Druckkräfte übertragbar sind.

An dem Gleitschuh 34 ist eine Gleitfläche 43 ausgebildet, mit der sich der Gleitschuh 34 und damit der Kolben 33 auf der Lauffläche 35 der Schwenkscheibe 36 abstützt. In der Gleitfläche 43 sind Schmierölnuten ausgebildet, die über einen in dem Gleitschuh 34 ausgebildeten Schmierölkanal 44, der in dem Kolben 33 als Schmierölbohrung 44' fortgesetzt wird, mit den in der Zylindertrommel 23 ausgebildeten Zylinderbohrungen 32 verbunden sind.

Durch das Abstützen der Gleitschuhe 34 an der Lauffläche 35 führen die Kolben 33 bei Rotation der gemeinsamen Antriebswelle 1 eine Hubbewegung aus, durch die das in den Zylinderräumen in der Zylindertrommel 23 befindliche Druckmittel unter Druck gesetzt wird. Ein Teil dieses Druckmittels tritt an der Gleitfläche 43 aus und bildet so auf der Lauffläche 35 ein hydrodynamisches Lager für den Gleitschuh 34.

Um das Druckmittel aus den Zylinderräumen in einen ersten bzw. zweiten hydraulischen Kreislauf zu fördern, sind mit den Zylinderbohrungen der ersten Gruppe 32.1 bzw. den Zylinderbohrungen der zweiten Gruppe 32.2 jeweils erste Verbindungskanäle 45.1 bzw. zweite Verbindungskanäle 45.2 verbunden. Die ersten und zweiten Verbindungskanäle 45.1 und 45.2 verlaufen von den Zylinderbohrungen der ersten Gruppe 32.1 bzw. den Zylinderbohrungen der zweiten Gruppe 32.2 zu der sphärischen Vertiefung 30, die an einer Stirnseite 46 der Zylindertrommel 23 ausgebildet ist.

In der verdrehgesichert mit der Anschlußplatte 5 verbundenen Steuerplatte 31 ist eine erste Steuerniere 48 und eine zweite Steuerniere 49 ausgebildet, die die Steuerplatte 31 in axialer Richtung durchdringen.

Weiterhin ist in der Steuerplatte 31 vorzugsweise eine dritte Steuerniere 50 und eine vierte Steuerniere 51 ausgebildet. Während die erste und die dritte Steuerniere 48 bzw. 50 über die Anschlußplatte 5 mit Arbeitsleitungen 52 bzw. 53 des ersten hydraulischen Kreislaufs verbunden sind, sind in entsprechender Weise die zweite Steuerniere 49 und die vierte Steuerniere 51 mit den Arbeitsleitungen 54 bzw. 55 des zweiten hydraulischen Kreislauf verbunden.

Die erste und dritte Steuerniere 48 und 50 weisen einen identischen ersten Abstand R₁' von der Längsachse 52 der Zylindertrommel 23 auf, der kleiner ist als der wiederum für die zweite Steuerniere 49 und die vierte Steuerniere 51 identische zweite Abstand R₂' von der Längsachse 52. Während einer Umdrehung der gemeinsamen Antriebswelle 1 werden die ersten Verbindungskanäle 45.1 im Wechsel mit der ersten Steuerniere 48 und der dritten Steuerniere 50 verbunden, so daß aufgrund der Hubbewegung der in den Zylinderbohrungen 32.1 der ersten Gruppe angeordneten Kolben 33 das Druckmittel z. B. über die dritte Steuerniere 50 angesaugt und über die erste Steuerniere 48 in die druckseitige Arbeitsleitung 52 oder 53 des ersten hydraulischen Kreislaufs gepumpt wird. Die ersten Verbindungskanäle 45.1 münden hierzu an der Stirnseite 46 der Zylindertrommel 23 in einem ersten Abstand R₁ von der Längsachse 52 der Zylindertrommel 23 aus, der dem ersten Abstand R₁' der ersten bzw. dritten Steuerniere 48 bzw. 50 von der Längsachse 52 der Zylindertrommel 23 entspricht.

In dem dargestellten Ausführungsbeispiel sind die ersten Verbindungskanäle 45.1 so in der Zylindertrommel 23 angeordnet, daß sie eine radiale Richtungskomponente aufweisen, durch die der erste Abstand R₁ der Ausmündung an der Stirnseite 46 kleiner ist als der Abstand auf der entgegengesetzten Seite der ersten Verbindungskanäle 45.1. Die zweiten Verbindungskanäle 45.2 münden dementsprechend an der Stirnseite 46 der Zylindertrommel 23 mit einem zweiten Abstand R₂ aus, der mit einem zweiten Abstand R₂' der zweiten und vierten Steuerniere 49 und 51 von der Längsachse 52 korrespondiert. Während einer Umdrehung der gemeinsamen Antriebswelle 1 werden damit die Zylinderbohrungen der zweiten Gruppe 32.2 über die zweiten Verbindungskanäle 32.2 abwechselnd mit der zweiten und vierten Steuerniere 49 und 51 verbunden.

Um während eines Saughubs ein Abheben der Gleitschuhe 34 von der Lauffläche 35 der Schwenkscheibe 36 zu verhindern, ist eine Niederhalteplatte 53 vorgesehen, welche die Gleitschuhe 34 an einem hierfür vorgesehenen Absatz umgreift. Die Niederhalteplatte 53 weist eine kugelförmige, zentrale Ausnehmung 54 auf, mit der sie sich an einem Stützkopf 55 abstützt, der an dem von der Stirnseite 46 abgewandten Ende der Zylindertrommel 23 angeordnet ist.

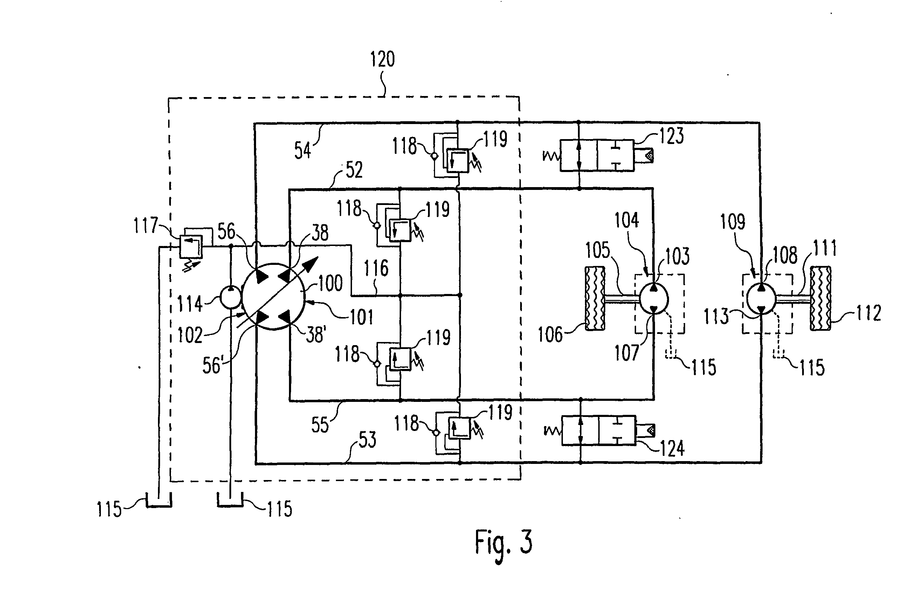

In Fig. 3 ist eine Ausführungsform eines erfindungsgemäßen hydraulischen Antriebssystems mit pumpenseitiger Hydraulikfluidmengenteilung unter Verwendung der obig beschriebenen erfindungsgemäßen Hydropumpe 100 mit zwei Teilfördersträngen 101 und 102 gezeigt.

Der erste Anschluß 38 des ersten Teilförderstrangs 101 der Hydropumpe 100 ist über die erste Arbeitsleitungen 52 mit dem ersten Anschluß 103 des ersten Hydromotors 104 verbunden. Der erste Hydromotor 104 treibt über einen ersten Antriebsstrang 105 ein erstes Rad 106 eines Fahrzeugs an. Der zweite Anschluß 107 des ersten Hydromotors 104 ist über die Arbeitsleitung 55 mit dem zweiten Anschluß 38' des ersten Teilförderstrangs 101 der Hydropumpe 100 verbunden. Der erste Anschluß 56 des zweiten Teilförderstrangs 102 der Hydropumpe 100 ist über die Arbeitsleitung 54 mit dem ersten Anschluß 108 des zweiten Hydromotors 109 verbunden. Der zweite Hydromotor 109 treibt über einen zweiten Antriebsstrang 111 ein zweites Rad 112 eines Fahrzeugs an. Der zweite Anschluß 113 des zweiten Hydromotors ist über die Arbeitsleitung 53 mit dem zweiten Anschluss 56' des zweiten Teilförderstrangs 102 der erfindungsgemäßen Hydropumpe 100 verbunden. Das Leckvolumen des ersten und zweiten Hydromotors 104 und 109 ist jeweils mit einem Hydrauliktank 115 zur Abfuhr von leckendem Hydraulikfluid verbunden.

Über eine in Fig. 3 nicht dargestellte Antriebswelle ist die in ihrer Hydraulikfluidmenge verstellbare Hydropumpe 100 mit ihren beiden Teilfördersträngen 101 und 102 mit einer Hilfspumpe 114 mechanisch gekoppelt. Die Hilfspumpe 114 fördert aus einem Tank 115 ein Hydraulikfluid in eine Speiseleitung 116. Der Druck des Hydraulikfluids in der Speiseleitung 116 wird über ein Druckbegrenzungsventil 117 auf ein bestimmtes Druckniveau eingestellt. Bei Druckabfall in den Arbeitsleitungen 52, 53, 54 und/oder 55 wird von der Speiseleitung 116 über jeweils ein Rückschlagventil 118 Hydraulikfluid in die Arbeitsleitung 52, 53, 54 und/oder 55 nachgeführt. Tritt ein Überdruck in den Arbeitsleitungen 52, 53, 54 und/oder 55 auf, so wird der Überdruck von der einen Überdruck führenden Arbeitsleitung 52, 53, 54 und/oder 55 auf bekannte Weise über jeweils ein Überdruckventil 119 in die Speiseleitung 116 abgebaut. Die Hydropumpe 100 mit ihren beiden Teilfördersträngen 101 und 102, die Hilfspumpe 114, das Druckbegrenzungsventil 117 sowie die vier Rückschlagventile 118 und die vier Überdruckventile 119 bilden zusammen ein Pumpenaggregat 120.

Die beiden Teilförderstränge 101 und 102 der verstellbaren Hydropumpe 100 bilden über die Arbeitsleitungen 52 und 55 und den ersten Hydromotor 104 bzw. über die Arbeitsleitungen 53 und 54 und den zweiten Hydromotor 109 jeweils einen getrennten hydraulischen Kreislauf. Diese beiden hydraulischen Kreisläufe sind aber bezüglich ihrer jeweiligen Hydraulikfluidfördermengen miteinander gekoppelt, da die beiden Hydraulikfluidfördermengen in einem bestimmten fixen Verhältnis zueinander stehen. Dieses fixe Verhältnis der Hydraulikfluidfördermengen der beiden hydraulischen Kreisläufe wird durch die konstruktive Auslegung des ersten und zweiten Förderstrangs 101 und 102 in der verstellbaren Hydropumpe 100, wie oben dargestellt, realisiert.

Kommt es zu einem Schlupf oder einem Durchdrehen des Rades 106 oder 112 bei fehlender Haftung des Rades 106 oder 112 auf der Fahrbahnoberfläche, so wird ein damit verbundener Anstieg des Hydraulikfluidstroms im ersten oder zweiten Hydromotor 104 oder 109 unterbunden. Durch die Kopplung der beiden Hydraulikfluidfördermengen im ersten und zweiten Förderstrang 101 und 102 der Hydropumpe 100 wird ein Anstieg der Hydraulikfluidfördermenge im ersten oder zweiten Förderstrang 101 oder 102 aufgrund eines Schlupfes oder eines Durchdrehens des Rades 106 oder 112 durch die weiterhin konstante Hydraulikfluidfördermenge im jeweils anderen Förderstrang 102 bzw. 101 verhindert. Die Hydraulikfluidfördermenge im ersten oder zweiten Förderstrang 101 oder 102 der verstellbaren Hydropumpe 100, der hydraulisch mit dem nicht schlupfenden und nicht durchdrehenden hydraulischen Antriebsstrang 105 oder 111 verbunden ist, "bremst" den ansteigenden Hydraulikfluidförderstrom im ersten oder zweiten Förderstrang 101 oder 102 des mit dem schlupfenden oder durchdrehenden hydraulischen Antriebsstrang 111 oder 105 verbundenen hydraulischen Kreislaufs ab.

Kurvenfahrten führen aufgrund der unterschiedlichen Laufwege der Räder zu unsymmetrischen Druckverhältnissen am ersten oder zweiten Hydromotor 104 und 109. Derartige Druckunterschiede zwischen den Arbeitsleitungen 52 und 54 bzw. 53 und 55 bei Kurvenfahrt des Fahrzeugs können durch Zwischenschaltung jeweils eines 2/2-Wegeventils 123 und 124 überbrückt werden. Werden diese 2/2-Wegeventile von der Steuerelektronik des Fahrzeugs bei Kurvenfahrt und nicht auftretenden Schlupf eines Rades 106 oder 112 abgeschaltet, so wird das jeweilige 2/2-Wegeventil in den geöffneten Zustand geschaltet, bei dem die jeweiligen Arbeitsleitungen 52 und 54 bzw. 53 und 55 miteinander hydraulisch verbunden sind. Auf diese Weise finden zwischen den Arbeitsleitungen 52 und 54 bzw. 53 und 55 hydraulische Ausgleichsströme zum Abbau des Druckunterschiedes zwischen den Arbeitsleitungen 52 und 54 bzw. 53 und 55 statt.

Die Erfindung ist nicht auf die dargestellte Ausführungsform beschränkt und kann auch zum Antrieb von Kettenfahrzeugen oder zum Antrieb von mehr als zwei Rädern zur Anwendung kommen.

## Patentansprüche

1. Hydrostatisches Antriebssystem mit mindestens einer Hydropumpe (100) und mindestens zwei Hydromotoren (104, 109), wobei die Hydropumpe (100) ihren Gesamthydraulikfluidstrom auf mindestens zwei Teilhydraulikfluidströme aufteilt, die jeweils in einem Teilförderstrang (101, 102) in einer gemeinsamen Zylindertrommel (23) der Hydropumpe (100) gefördert werden, und wobei mindestens ein erster einen ersten Antriebsstrang (105) antreibender Hydromotor (104) mit seinem ersten Anschluß (103) mit dem ersten Anschluß (38) des ersten Teilförderstrangs (101) der Hydropumpe (100) und mit seinem zweiten Anschluß (107) mit dem zweiten Anschluß (38') des ersten Förderstrangs (101) der Hydropumpe (100) und mindestens ein zweiter einen zweiten Antriebsstrang (110) antreibender Hydromotor (109) mit seinem ersten Anschluß (108) mit dem ersten Anschluß (56) des zweiten Teilförderstrangs (102) der Hydropumpe (100) und mit seinem zweiten Anschluß (112) mit dem zweiten Anschluß (56') des zweiten Teilförderstrangs (102) der Hydropumpe (100) verbunden ist.

2. Hydostatisches Antriebssystem nach Anspruch 1,
**dadurch gekennzeichnet,**
**daß** jeweils zwischen den beiden Teilhydraulikfluidströmen in den beiden jeweiligen Arbeitsleitungen (52 und 54, 53 und 55), die jeweils mit den beiden ersten oder zweiten Anschlüssen (38 und 56, 38' und 56') der Hydropumpe (100) verbunden sind, im Bedarfsfall ein Ausgleichsstrom zum Differentialausgleich stattfindet.

3. Hydrostatisches Antriebssystem nach Anspruch 2,
**dadurch gekennzeichnet,**
**daß** der Ausgleichsstrom zwischen den beiden Teilhydraulikfluidströmen jeweils über ein zwischen den beiden Arbeitsleitungen (52 und 54, 53 und 55) geschaltetes 2/2-Wegeventil (123, 124) realisiert ist, das im Bedarfsfall gesperrt ist.

4. Hydostatisches Antriebssystem nach Anspruch 3,
**dadurch gekennzeichnet,**
**daß** jeweils eines der beiden 2/2-Wegeventile (123, 124) ein- und ausspeiseseitig in die Hydropumpe (100) integriert ist.

5. Hydostatisches Antriebssystem nach einem der Ansprüche 1 bis 4,
**dadurch gekennzeichnet,**
**daß** die Hydropumpe (100) als Verstellpumpe ausgeführt ist.

6. Hydostatisches Antriebssystem nach einem der Ansprüche 1 bis 5,
**dadurch gekennzeichnet,**
**daß** jeder Hydromotor (104, 109) als Konstantmotor, Schaltmotor und/oder Verstellmotor ausgeführt ist.

## Claims

1. Hydrostatic drive system having at least one hydraulic pump (100) and at least two hydraulic motors (104, 109), wherein the hydraulic pump (100) divides up its overall flow of hydraulic fluid over at least two partial flows of hydraulic fluid which are each delivered in a partial delivery line (101, 102) in a common cylinder drum (23) belonging to the hydraulic pump (100), and wherein at least one first hydraulic motor (104) driving a first drive line (105) is connected by its first connection (103) to the first connection (38) of the first partial delivery line (101) of the hydraulic pump (100), and by its second connection (107) to the second connection (38') of the first delivery line (101) of the hydraulic pump (100), and at least one second hydraulic motor (109) driving a second drive line (110) is connected by its first connection (108) to the first connection (56) of the second partial delivery line (102) of the hydraulic pump (100), and by its second connection (112) to the second connection (56') of the second partial delivery line (102) of the hydraulic pump (100).

2. Hydrostatic drive system according to claim 1,
**characterised in that**,
if necessary, an equalising flow for equalising a differential takes place, in each case, between the two partial flows of hydraulic fluid in the two particular working conduits (52 and 54, 53 and 55) which are connected, in each case, to the two first or second connections (38 and 56, 38' and 56') of the hydraulic pump (100).

3. Hydrostatic drive system according to claim 2,
**characterised in that**
the equalising flow between the two partial flows of hydraulic fluid is realised, in each case, via a 2/2-way valve (123, 124) which is connected between the two working conduits (52 and 54, 53 and 55) and which is closed if necessary.

4. Hydrostatic drive system according to claim 3,
**characterised in that**
one of the two 2/2-way valves (123, 124) is integrated into the hydraulic pump (100) on the feeding-in and feeding-out sides in each case.

5. Hydrostatic drive system according to one of claims 1 to 4,
**characterised in that**
the hydraulic pump (100) is designed as an adjusting pump.

6. Hydrostatic drive system according to one of claims 1 to 5,
**characterised in that**
each hydraulic motor (104, 109) is designed as a fixed-displacement motor, a torque motor and/or an adjusting motor.

## Revendications

1. Système d'entraînement hydrostatique comprenant au moins une pompe hydraulique (100) et au moins deux moteurs hydrauliques (104, 109), ladite pompe hydraulique (100) répartissant la totalité du débit de fluide hydraulique en au moins deux débits partiels de fluide hydraulique qui sont respectivement refoulés dans un circuit de refoulement partiel (101, 102) dans un tambour de vérin commun (23) de la pompe hydraulique (100), et dans lequel au moins un premier moteur hydraulique (104) qui entraîne une première ligne d'entraînement (105) est raccordé par son premier raccord (103) au premier raccord (38) du premier circuit partiel de refoulement (101) de la pompe hydraulique (100) et par son second raccord (107) au second raccord (38') du premier circuit de refoulement (101) de la pompe hydraulique (100), et au moins un second moteur hydraulique (109) qui entraîne une seconde ligne d'entraînement (110) est raccordé par son premier raccord (108) au premier raccord (56) du second circuit partiel de refoulement (102) de la pompe hydraulique (100) et par son second raccord (112) au second raccord (56') du second circuit partiel de refoulement (102) de la pompe hydraulique (100).

2. Système d'entraînement hydrostatique selon la revendication 1,
**caractérisé en ce que** ,
pour une compensation différentielle, il se produit en cas de besoin un courant de compensation respectivement entre les deux débits partiels du fluide hydraulique dans les deux conduites de travail respectives (52 et 54, 53 et 55), qui sont raccordées respectivement aux deux premiers ou aux deux seconds raccords (38 et 56, 38' et 56') de la pompe hydraulique (100).

3. Système d'entraînement hydrostatique selon la revendication 2,
**caractérisé en ce que**
le courant de compensation entre les deux débits partiels de fluide hydraulique est réalisé respectivement via un distributeur à 2 voies/2 positions (123, 124) branché entre les deux conduites de travail (52 et 54, 53 et 55), qui est fermé en cas de besoin.

4. Système d'entraînement hydrostatique selon la revendication 3,
**caractérisé en ce que**
l'un des deux distributeurs à 2 voies/2 positions (123, 124) respectif est intégré dans la pompe hydraulique (100) du côté entrée et du côté sortie.

5. Système d'entraînement hydrostatique selon l'une des revendications 1 à 4, **caractérisé en ce que**
la pompe hydraulique (100) est réalisée sous forme de pompe réglable.

6. Système d'entraînement hydrostatique selon l'une des revendications 1 à 5, **caractérisé en ce que**
chaque moteur hydraulique (104, 109) est réalisé sous forme de moteur à débit constant, sous forme de moteur commutable et/ou sous forme de moteur réglable.
